# EUROPÄISCHE PATENTANMELDUNG

(11) **EP 4 790 345 A1**
(43) Veröffentlichungstag der Anmeldung: **12.08.2026**
(21) Anmeldenummer: 26156577.4
(22) Anmeldetag: 05.02.2026
(51) Int. Cl.: F28D 9/00, F28D 20/02, F28F 3/14, F25B 25/00, F28F 3/12

(54) **WÄRMESPEICHER, WÄRMEPUMPE MIT WÄRMESPEICHER UND VERFAHREN ZUM BETREIBEN EINER WÄRMEPUMPE**

(30) Priorität: 10.02.2025 DE 102025104843
(71) Anmelder: Viessmann Holding International GmbH, 35108 Allendorf (Eder) (DE)
(72) Erfinder: GLEIM, Eugen, 35094 Lahntal (DE); KESSLER, Michael, 35745 Herborn (DE); VAUPEL, Manfred, 35066 Frankenberg (DE)
(74) Vertreter: MERH-IP Matias Erny Reichl Hoffmann Patentanwälte PartG mbB

(57) **Zusammenfassung**

Die vorliegende Erfindung betrifft einen Wärmespeicher (13) für eine Wärmepumpe (10). Der Wärmespeicher (13) umfasst mindestens einen flächigen Wärmeübertrager (1) und ein Wärmespeichermedium (2), das den Wärmeübertrager (1) umgibt. Der mindestens eine Wärmeübertrager (1) umfasst drei Bleche (1a, 1b, 1c), die durch ein Rollbond-Verfahren zusammengefügt sind. Auf einer ersten Hauptseite des Wärmeübertragers (1) ist eine erste Leitung (31) für ein Kältemittel eines Kältemittelkreislaufs der Wärmepumpe (10) ausgebildet. Auf einer zweiten Hauptseite des Wärmeübertragers (1) ist eine zweite Leitung (32) für ein Wärmeträgermedium eines Heizkreises (20) und/oder dritte Leitung (33) für einen Trinkwasserkreis (30) ausgebildet. Eine Trennwand ist zwischen der ersten Hauptseite und der zweiten Hauptseite angeordnet.

## Beschreibung

Die vorliegende Erfindung betrifft einen Wärmespeicher, eine Wärmepumpe und ein Verfahren zum Betreiben der Wärmepumpe. Der Wärmespeicher umfasst einen Rollbond-Wärmeübertrager, der insbesondere als Verflüssiger in einer Wärmepumpe betrieben wird.

Wärmepumpen zeichnen sich durch einen hohen Wirkungsgrad aus und können daher unter ökologischen und ökonomischen Gesichtspunkten besonders attraktiv zum Heizen und/oder Kühlen eines Gebäudes verwendet werden. Das Heizen mit Umweltwärme ist einerseits klimafreundlich, andererseits bieten viele Energieversorger seit einigen Jahren spezielle Wärmepumpentarife an, die finanziell attraktiver sind als ein normaler Stromtarif.

Bekannte Wärmepumpen weisen einen Kältemittelkreislauf auf. Als Kältemittel kann beispielsweise R290 (Propan) verwendet werden. Da Propan brennbar ist, muss ein ungewolltes Austreten verhindert werden.

An einem Wärmeübertrager im Kältemittelkreislauf der Wärmepumpe nimmt das Kältemittel im Heizbetrieb Wärme aus einem Umgebungsmedium auf und verdampft. Entsprechend wird dieser Wärmeübertrager im Heizbetrieb als Verdampfer bezeichnet. Ferner weist eine gattungsgemäße Wärmepumpe einen weiteren Wärmeübertrager auf, der im Heizbetrieb als Verflüssiger betrieben wird. Hier wird Wärme von dem durch einen Verdichter komprimierten Kältemittel auf ein Wärmeträgermedium in einem Heizkreis und/oder auf eine Trinkwasserleitung übertragen, wobei das Kältemittel vom gasförmigen in den flüssigen Zustand übergeht.

Die Gebrauchsmusterschrift DE 20 2017 006 878 U1 offenbart einen Eisspeicher mit einem Entzugswärmetauscher, der im Rollbondverfahren hergestellt ist.

Die internationale Patentanmeldung Nr. WO 2012/065 975 A1 beschreibt eine Wärmepumpe zur Warmwasserbereitung, die einen Latentwärmespeicher mit einem Phasenwechselmaterial aufweist. Der Verflüssiger der Wärmepumpe sowie der Frischwasserzulauf können jeweils als getrennte Rollbond-Wärmetauscher mit geringem Wärmeübergangswiderstand zum Phasenwechselmaterial ausgebildet sein.

Die japanische Offenlegungsschrift Nr. JP 2004-044 896 A offenbart einen Rollbond-Wärmetauscher, bei dem Leitungen für ein Kältemittel und Wasserleitungen zwischen drei Platten ausgebildet sind, um eine Kontamination des Trinkwassers mit Kältemittel zu verhindern.

Ausgehend vom Stand der Technik, soll ein verbesserter Wärmespeicher für eine Wärmepumpe bereitgestellt werden.

Die Lösung der Aufgabe gelingt durch den Wärmespeicher nach Anspruch 1 sowie durch ein Verfahren zum Betreiben einer Wärmepumpe nach Anspruch 12. Bevorzugte Ausgestaltungen sind Gegenstand der Unteransprüche, der Zeichnungen sowie der folgenden Beschreibung von Ausführungsbeispielen.

Der erfindungsgemäße Wärmespeicher für eine Wärmepumpe umfasst mindestens einen flächigen Wärmeübertrager und ein Wärmespeichermedium, das den mindestens einen Wärmeübertrager zumindest teilweise umgibt. In bevorzugten Ausgestaltungen können zwei oder mehr, drei oder mehr oder vier oder mehr Wärmeübertrager im Wärmespeicher angeordnet sein. Bei zwei oder mehr Wärmeübertragern können diese vorzugsweise parallel zueinander angeordnet sein.

Der erfindungsgemäße Wärmeübertrager umfasst drei Bleche, die durch ein Rollbond-Verfahren zusammengefügt sind. Ein mittleres Blech dient als Träger, auf dem zwei äußere Bleche aufgetragen sind. Beispielsweise können die äußeren Bleche mit dem mittleren Blech verklebt sein. Zwischen den äußeren Blechen und dem mittleren Trägerblech können dann Leitungen für ein Kältemittel und für ein Wärmeträgermedium eines Heizkreises und/oder für Wasser aus einem (offenen) Trinkwasserkreis ausgebildet werden.

Eine erste Leitung für das Kältemittel eines Kältemittelkreislaufs der Wärmepumpe ist mittels einem ersten (äußeren) Blech auf einer ersten Hauptseite des Wärmeübertragers ausgebildet.

Eine zweite Leitung für das Wärmeträgermedium des Heizkreises ist mittels einem zweiten (äußeren) Blech auf einer der ersten Hauptseite gegenüberliegenden zweiten Hauptseite des Wärmeübertragers ausgebildet.

Alternativ oder zusätzlich zur zweiten Leitung kann eine dritte Leitung für Wasser des (offenen) Trinkwasserkreis mittels dem zweiten Blech auf der zweiten Hauptseite ausgebildet sein.

Das Kältemittel wird auch als Primärmedium bezeichnet. Die erste Leitung ist somit Teil des Primärkreises der Wärmepumpe. Das Wärmeträgermedium des Heizkreises und das Trinkwasser werden auch als Sekundärmedien bezeichnet, die durch die Sekundärkreisläufe der Wärmepumpe fließen. Es können somit Ausführungen des Wärmeübertragers mit einen Sekundärmedium oder mit zwei Sekundärmedien geben. Ein Wärmespeicher kann entsprechend getrennte Zwei-Medien-Wärmeübertrager für das erste Sekundärmedium und das zweite Sekundärmedium aufweisen oder mindestens einen Drei-Medien-Wärmeübertrager.

Das dritte (mittlere) Blech dient hierbei als Trennwand zwischen der ersten Leitung, Leitungen der ersten Hauptseite und der zweiten und/oder dritten Leitung der zweiten Hauptseite. Somit kann eine Kontamination des Wärmeträgermediums des Heizkreises (auch als Heizkreismedium bezeichnet) und des Trinkwassers mit Kältemittel mit hoher Sicherheit verhindert werden.

Die Trennwand ist vorzugsweise aus einem Material mit hoher Wärmeleitfähigkeit ausgebildet, beispielsweise Aluminium oder Edelstahl. Die Trennwand dient somit auch als wärmeleitendes Element, das einen effizienten Wärmeübertrag vom Kältemittel auf das Heizkreismedium bzw. auf das Trinkwasser ermöglicht. Darüber hinaus dient die Trennwand als strukturelles, mechanisch tragendes Element des Wärmeübertragers.

Gemäß bevorzugten Ausführungen ist das Wärmespeichermedium ein Phasenwechselmaterial ("phase change material", PCM). Beispiele für übliche PCM sind Salze, Paraffine oder Wassereis. Vorteile von PCM sind, dass hohe Wärmemengen oder eine Temperaturänderung des Wärmespeichers gespeichert werden können. Entsprechend muss der Wärmespeicher auch keinen hohen Drücken standhalten können. In alternativen Ausführungen kann auch ein anderes Medium als Wärmespeichermedium verwendet werden, beispielsweise Wasser, bei dem die Wärme nicht als latente Wärme gespeichert wird.

Die erste Leitung, die zweite Leitung und die dritte Leitung können vorzugsweise jeweils mäanderförmig auf der ersten Hauptfläche bzw. zweiten Hauptfläche ausbildet sein. Auf diese Weise kann eine Länge der Leitungen auf dem Wärmeübertrager erhöht werden, so dass eine effiziente Wärmeübertragung stattfinden kann.

Die erste Leitung, die zweite Leitung und die dritte Leitung können vorzugsweise im Gegenstromprinzip über die Oberflächen des Wärmeübertragers angeordnet sein. Das bedeutet, dass das Kühlmittel in der ersten Leitung entgegen der Richtung der Medien in der zweiten Leitung bzw. dritten Leitung fließt, so dass der Temperaturunterschied zwischen Kühlmittel und Heizkreismedium bzw. zwischen Kühlmittel und Trinkwasser möglichst gering ist, wodurch die Effizienz der Wärmeübertragung erhöht werden kann.

Die Querschnitte der ersten Leitung, der zweiten Leitung und/oder der dritten Leitung können vorzugsweise jeweils die Form eines Kreissegments aufweisen. Diese Form ermöglicht eine besonders hohe Kontaktfläche des jeweiligen Mediums mit der mittleren Trennwand des Wärmeübertragers, so dass die Effizienz der Wärmeübertragung weiter erhöht werden kann. Eine Sonderform des Kreissegments ist ein Halbkreis. Es sind jedoch auch andere Ausführungen denkbar, bei denen die Leitungen jeweils eine flache Seite auf Seite der Trennwand aufweisen, an die sich eine runde, elliptische oder abgeflachte Form auf der anderen Seite anschließt.

Eine Querschnittsfläche der zweiten Leitung und/oder der dritten Leitung kann vorzugsweise jeweils das Doppelte oder mehr der Querschnittsfläche der ersten Leitung betragen. Da das Kältemittel in der Regel mit einem relativ hohen Druck von beispielsweise bis zu ca. 30 bar bzw. beispielsweise bis zu 45 bar, je nach verwendetem Kältemittel, durch die erste Leitung fließt, wird eine niedrige Querschnittsfläche für die erste Leitung bevorzugt, um ein Leck in der ersten Leitung und ein dementsprechendes Austreten des Kältemittels zu verhindern. Die zweite und/oder dritte Leitung können jeweils einen deutlich höheren Querschnitt aufweisen, da das Heizkreismedium und das Trinkwasser üblicherweise mit deutlich geringeren Drücken von weniger als 10 bar durch die zweite bzw. dritte Leitung fließen.

Gemäß einer bevorzugten Ausführung kann der (mindestens eine) flächige Wärmeübertrager mindestens einen Teil eines Gehäuses des Wärmespeichers bilden, welches das Wärmespeichermedium umgibt.

Die Verwendung des Wärmeübertragers als Teil des Gehäuses ist insbesondere dann möglich, wenn ein PCM als Wärmespeichermedium verwendet wird, welches keinen hohen Druck im Wärmespeicher erzeugt. Das Gehäuse bzw. die Wandung des Wärmespeichers muss entsprechend nur das Eigengewicht tragen und gewissen mechanischen Belastungen standhalten. Die Verwendung eines Wärmeübertragers als Teil des Gehäuses des Wärmespeichers ermöglicht eine besonders kompakte Ausführung des Wärmespeichers.

Besonders vorzugsweise ist bei der Verwendung des Wärmeübertragers als Teil des Gehäuses die erste Hauptseite des Wärmeübertragers mit der ersten Leitung im Inneren des Gehäuses des Wärmespeichers angeordnet, um den Wärmeübertrag auf das Wärmespeichermedium zu verbessern.

Alternativ kann die erste Hauptfläche des Wärmeübertragers mit der ersten Leitung an einer Außenseite des Gehäuses angeordnet sein. Hierbei kann der Wärmeübertrag vom Wärmespeichermedium auf das Heizkreismedium bzw. das Trinkwasser verbessert werden.

Eine bevorzugte Ausführung des Wärmespeichers kann vorzugsweise zwei oder mehr, drei oder mehr oder vier oder mehr flächige Wärmeübertrager aufweisen, die besonders vorzugsweise parallel zueinander angeordnet sind. Die Wärmeübertrager können besonders vorzugsweise in Serie miteinander verbunden sein. In alternativen Ausführungen können die mehr als zwei flächigen Wärmeübertrager auch parallel zueinander verbunden sein. Diese Ausführung ermöglicht einen besonders guten Wärmeübertrag vom Wärmeübertrager auf das Wärmespeichermedium, da ein maximaler Abstand von einem Bereich im Wärmespeichermedium zum Wärmeübertrager geringgehalten werden kann. Außerdem können die einzelnen Wärmeübertrager jeweils so angeordnet werden, dass sich Hauptseiten mit Leitungen für das Kältemittel und Hauptseiten mit Leitungen für Sekundärmedium jeweils gegenüberliegen, wodurch der Wärmeübertrag verbessert werden kann. Der maximale Abstand kann beispielsweise 2 cm oder weniger oder 1 cm oder weniger betragen. Ferner kann so eine platzsparende Ausgestaltung des Wärmespeichers erreicht werden.

In einer weiteren bevorzugten Ausführung weist der Wärmespeicher mindestens einen flächigen Wärmeübertrager auf, der abwechselnd um 180 Grad zu mehreren Lagen gefaltet angeordnet ist. Zwischen den Lagen ist vorzugsweise jeweils das Wärmespeichermedium angeordnet ist. Diese Ausführung ermöglicht einen besonders guten Wärmeübertrag vom Wärmeübertrager auf das Wärmespeichermedium, da ein maximaler Abstand von einem Bereich im Wärmespeichermedium zum Wärmeübertrager geringgehalten werden kann. Der maximale Abstand kann beispielsweise 2 cm oder weniger oder 1 cm oder weniger betragen. Ferner kann so eine platzsparende Ausgestaltung des Wärmespeichers erreicht werden.

In einer weiteren bevorzugten Ausführung weist der Wärmespeicher mindestens einen flächigen Wärmeübertrager auf, der vorzugsweise spiralförmig oder schneckenförmig aufgewickelt angeordnet ist. Zwischen den Wicklungen ist jeweils das Wärmespeichermedium angeordnet. Diese Ausführung ermöglicht einen besonders guten Wärmeübertrag vom Wärmeübertrager auf das Wärmespeichermedium, da ein maximaler Abstand zwischen einem Bereich im Wärmespeichermedium und dem Wärmeübertrager geringgehalten werden kann. Der maximale Abstand kann beispielsweise 2 cm oder weniger oder 1 cm oder weniger betragen. Ferner kann so eine platzsparende Ausgestaltung des Wärmespeichers erreicht werden.

Ein Abstand zwischen den zwei oder mehr flächigen Wärmeübertragern oder zwischen den Lagen oder zwischen den Wicklungen kann besonders vorzugsweise mindestens das Doppelte des Durchmessers der zweiten Leitung und/oder der dritten Leitung betragen. Es ist vorteilhaft sicherzustellen, dass ein Mindestabstand zwischen einzelnen Wärmeübertragern bzw. dessen Lagen oder Wicklungen eingehalten wird, damit das dazwischen angeordnete Wärmespeichermedium nicht mehr Wärme erreicht, als es speichern kann. Durch eine möglichst gleichmäßige Anordnung kann die Wärmekapazität des Wärmespeichers maximiert werden.

Vorzugsweise sind die erste Leitung und die zweite Leitung so ausgebildet, dass sie sich mindestens entlang der Hälfte der Länge der ersten Leitung überlappen. Diese Anordnung ermöglicht einen möglichst effizienten Wärmeübertrag vom Kältemittel auf das Heizkreismedium.

Weiter vorzugsweise sind die erste Leitung und die dritte Leitung so ausgebildet, dass sie sich mindestens entlang der Hälfte der Länge der ersten Leitung überlappen. Diese Anordnung ermöglicht einen möglichst effizienten Wärmeübertrag vom Kältemittel auf das Trinkwasser.

Eine erfindungsgemäße Wärmepumpe zum Heizen oder Kühlen eines Gebäudes umfasst einen Wärmespeicher nach einem Aspekt der vorliegenden Offenbarung. Der Wärmeübertrager des Wärmespeichers kann in einem Heizbetrieb der Wärmepumpe als Verflüssiger betrieben werden.

Ein erfindungsgemäßes Verfahren zum Betreiben der Wärmepumpe ist dadurch gekennzeichnet, dass die Wärmepumpe einen Betriebszustand aufweist, bei dem der Wärmespeicher über den Wärmeübertrager mit Wärme beladen wird, während der Heizkreis Wärme aufnimmt und/oder während der Trinkwasserkreis Wärme aufnimmt. Dieser Betriebsmodus wird im Folgenden auch als Boostermodus bezeichnet. Ein herkömmlicher Warmwasserspeicher kann keine Wärme mehr abgeben, wenn seine Wärme (nahezu vollständig) entnommen wurde.

Die erfindungsgemäße Ausgestaltung des Wärmespeichers mit mindestens einem Wärmeübertrager erlaubt jedoch auch dann Wärme vom Kältemittel auf das Heizkreismedium und/oder auf das Trinkwasser zu übertragen, während der Wärmespeicher mit Wärme beladen wird, selbst wenn das Wärmespeichermedium keine Wärme mehr gespeichert hat. Dies ist deshalb möglich, weil über den Wärmeübertrager eine direkte Wärmeübertragung vom Kältemittel auf die Sekundärmedien erfolgen kann, ähnlich wie bei einem Durchlauferhitzer.

### KURZBESCHREIBUNG DER FIGUREN

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: Fig. 1 illustriert einen Wärmepumpenkreislauf gemäß einem Ausführungsbeispiel.
- **Figur 2**: Fig. 2 illustriert einen Drei-Medien-Wärmeübertrager gemäß einem Ausführungsbeispiel.
- **Figur 3**: Fig. 3 illustriert einen Zwei-Medien-Wärmeübertrager gemäß einem Ausführungsbeispiel.
- **Figur 4**: Fig. 4 illustriert einen Querschnitt durch einen Wärmeübertrager gemäß einem Ausführungsbeispiel.
- **Figur 5**: Fig. 5 illustriert einen gefalteten Wärmeübertrager gemäß einem Ausführungsbeispiel.
- **Figur 6**: Fig. 6 illustriert einen gewickelten Wärmeübertrager gemäß einem Ausführungsbeispiel.
- **Figur 7**: Fig. 7A bis 7D illustrieren verschiedene Betriebszustände einer Wärmepumpe mit einem Trinkwasserkreis.
- **Figur 8**: Fig. 8A bis 8D illustrieren verschiedene Betriebszustände einer Wärmepumpe mit einem Heizkreis.

### AUSFÜHRLICHE BESCHREIBUNG DER ERFINDUNG ANHAND VON AUSFÜHRUNGSBEISPIELEN

Bei der nachfolgenden Beschreibung einer bevorzugten Ausführungsform der vorliegenden Erfindung bezeichnen gleiche Bezugszeichen gleiche oder vergleichbare Komponenten.

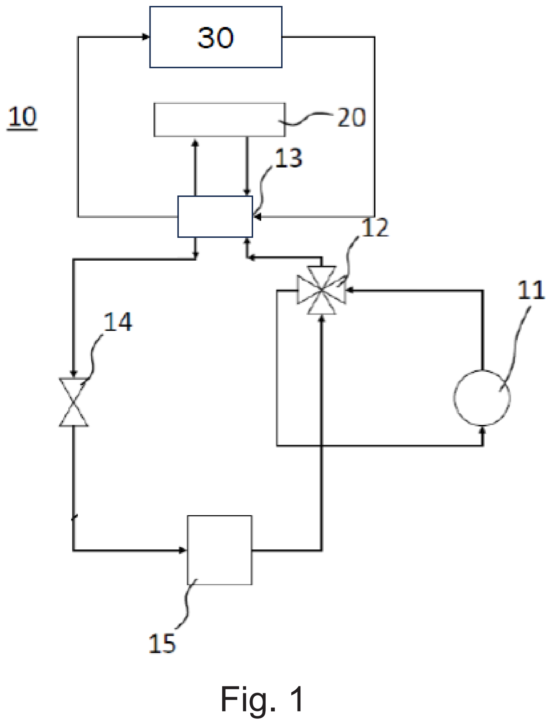

Fig. 1 zeigt eine vereinfachte Darstellung einer erfindungsgemäßen Wärmepumpe 10 zum Heizen und/oder Kühlen, insbesondere eines Gebäudes oder eines Teilbereichs des Gebäudes. Die Wärmepumpe 10 umfasst einen Verdichter 11, ein Vierwegeventil 12, einen Verflüssiger 13, ein Expansionsventil 14 und einen Verdampfer 15. Weitere (optionale) Komponenten der Wärmepumpe 10 sind nicht dargestellt.

Die Pfeile illustrieren die Richtung, in der das Kältemittel im Heizbetrieb der Wärmepumpe 10 durch den Kältemittelkreislauf zirkuliert. Durch Betätigen des Vierwegeventils 12 kann ein Kreislaufumkehr bewirkt werden, um die Wärmepumpe 10 beispielsweise im Kühlbetrieb oder im Abtaubetrieb zu betreiben.

Der Verflüssiger 13 ist vorliegend ein erfindungsgemäßer Wärmespeicher und umfasst mindestens einen erfindungsgemäßen Wärmeübertrager 1 zum Übertragen von Wärme zwischen dem Kältemittel im Kältemittelkreislauf und einem Wärmeträgermedium in einem Heizkreis 20 des Gebäudes. Ferner kann Wärme an einem (offenen) Trinkwasserkreis 30 des Gebäudes übertragen werden.

Das Funktionsprinzip der Wärmepumpe 10 entspricht der Wirkungsweise einer bekannten Wärmepumpe. Im Heizbetrieb dient der mindestens eine Wärmeübertrager 1 im Wärmespeicher 13 als Verflüssiger. Im Kühlbetrieb dient der Wärmespeicher 13 als Verdampfer und der Verdampfer 15 wird zum Verflüssiger. Der Wärmeübertrager 1 des Verflüssigers 13 wird erfindungsgemäß in einem Rollbondverfahren hergestellt und ist in einem Wärmespeichermedium angeordnet.

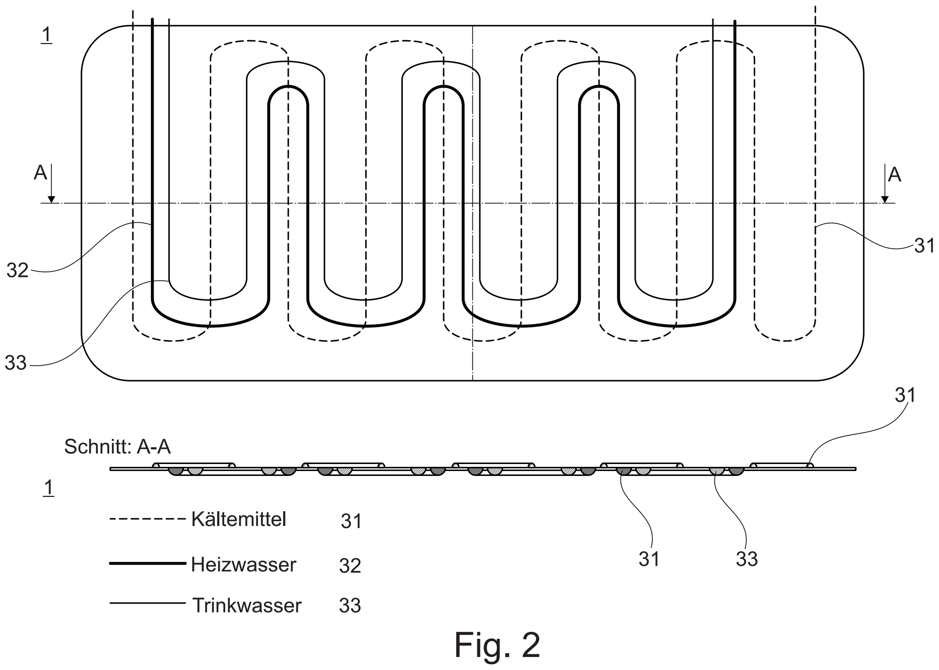

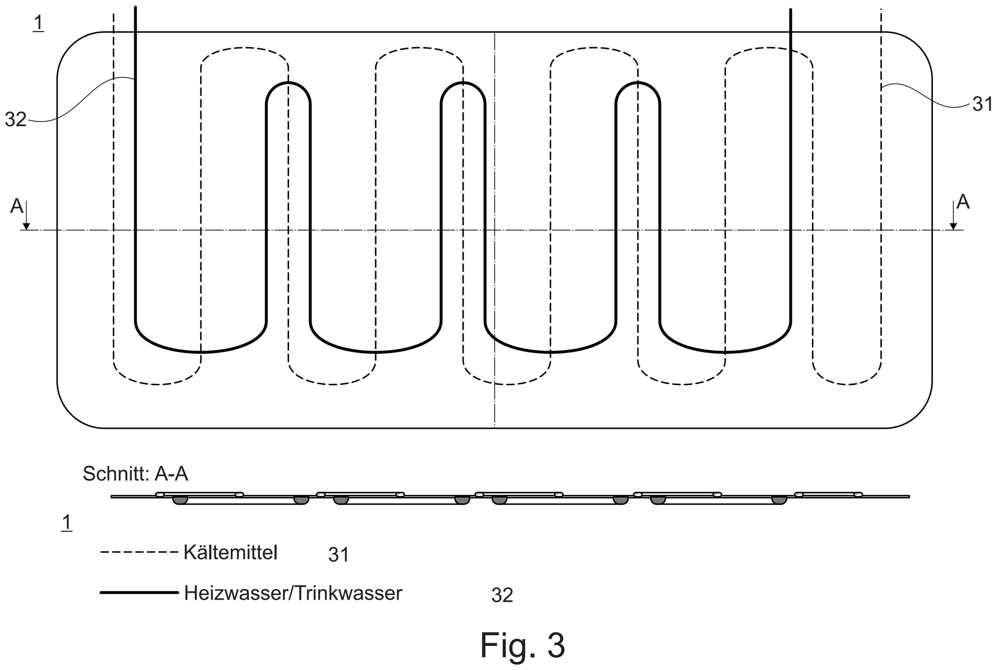

Fig. 2 illustriert ein Ausführungsbeispiel eines Drei-Medien-Wärmeübertragers 1 und Fig. 3 illustriert ein Ausführungsbeispiel eines Zwei-Medien-Wärmeübertragers 1. Der strukturelle Aufbau ist in beiden Fällen im Wesentlichen identisch. Fig. 2 und 3 zeigen jeweils eine Draufsicht auf eine Hauptfläche des Wärmeübertragers 1 und einen Schnitt A-A durch den Wärmeübertrager 1.

Der Wärmeübertrager 1 wird in einem Rollbondverfahren aus drei Blechen hergestellt. Ein mittleres drittes Blech 1c dient als struktureller Träger und Trennwand, auf dem ein erstes äußeres Blech 1a und ein zweites äußeres Blech 1b angeordnet sind, und die jeweils eine erste Leitung 31 und eine zweite Leitung 32 und/oder eine dritte Leitung 33 ausbilden, die vorliegend mäanderförmig auf der ersten Hauptseite bzw. zweiten Hauptseite des Wärmeübertragers 1 angeordnet sind.

Die drei Bleche 1a, 1b, 1c bestehen jeweils aus einem Metall mit hoher Wärmeleitfähigkeit, beispielsweise Aluminium bzw. einer Aluminiumlegierung oder Edelstahl. Das erste Blech 1a und das zweite Blech 1b weisen vorzugsweise eine Dicke von ca. 0,2 mm bis 1 mm auf, besonderes vorzugsweise ca. 0,3 mm bis 0,6 mm, insbesondere 0,5 mm. Das dritte mittlere Blech 1c weist vorzugsweise eine höhere Dicke als das erste und zweite Blech 1a, 1b auf, beispielsweise ca. 0,3 mm bis 1 mm, besonderes vorzugsweise ca. 0,4 mm bis 0,8 mm, insbesondere 0,6 mm.

In Fig. 2 sind die zweite Leitung 32 und dritte Leitung 33 im Wesentlichen parallel zueinander mit einem gleichmäßigen Abstand zueinander ausgebildet. In Fig. 3 ist nur eine zweite Leitung 32 für ein Heizkreismedium oder für Trinkwasser vorgesehen.

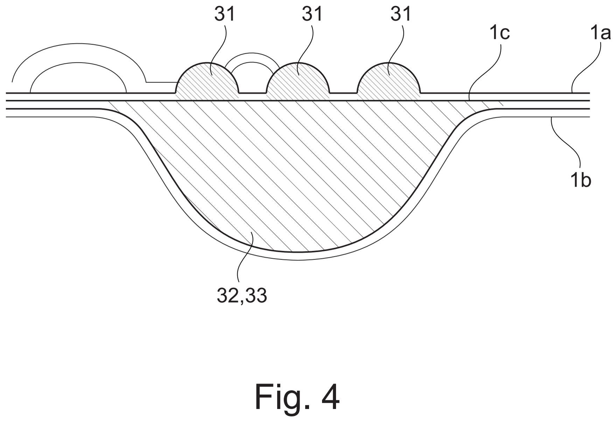

Ferner ist aus Fig. 2 und 3 ersichtlich, dass sich die erste Leitung 31 und die zweite Leitung 32 und/oder dritte Leitung 33 jeweils paarweise zumindest teilweise überlappen können. Eine weitere alternative Anordnung der ersten Leitung 31 und zweiten Leitung 32 oder dritten Leitung 33 mit Überlappung ist beispielhaft in Fig. 4 dargestellt. Hier überlappen drei Abschnitte der ersten Leitung 31 mit der zweiten Leitung 32 oder dritten Leitung 33. Auf diese Weise kann eine besonders effiziente direkte Wärmeübertragung vom Kältemittel auf das Heizkreismedium bzw. das Trinkwasser erfolgen, ohne den Umweg über das Wärmespeichermedium.

Wie in Fig. 2, 3 und 4 gezeigt, sind die Leitungsbahnen für das Kältemittel (erste Leitung 31) und die Leitungsbahnen für Trinkwasser bzw. Heizkreismedium (zweite Leitung 32 und/oder dritte Leitung 33) nebeneinander bzw. einander gegenüberliegend so angeordnet, dass sie in wärmeübertragendem Kontakt miteinander stehen. Die Trennwand dient dabei einerseits als Schutz vor Kontamination der Sekundärmedien mit Kältemittel und andererseits als Wärmekontaktfläche.

Die Anordnung der Leitungen 31, 32, 33 auf der Wärmeübertrager 1 kann je nach Anforderung des Kältemitteltyps symmetrisch oder asymmetrisch sein. Freie Flächen zwischen Leitungsbahnen können als Übertragerrippen z.B. ausgeklinkt und umgeklappt sein, so dass die Abstände zwischen den Übertragerflächen verringert werden. Die freien Flächen zwischen den Leitungsbahnen können auch anderweitig verformt, z.B. verprägt sein, um die Übertragungsfläche zu erhöhen, wodurch die Wärmeübertragung verbessert werden kann.

Als freie Flächen werden Bereiche des Wärmeübertragers bezeichnet, die nicht mit einem Medium durchströmt werden, sprich, wo sich keine Leitungen befinden. Diese Bereiche können so verformt werden, dass die Wärmeübertragung auf das Trinkwasser bzw. Heizkreismedium verbessert werden kann. Dies ist je nach Anordnung und dem Abstand der Leitungen zueinander möglich. Beträgt der kleinste Abstand zwischen den Leitungen z.B. 10 cm, kann dieser Bereich der freien Fläche vorzugsweise eine Verprägung oder dergleichen aufweisen, um die Oberfläche zu vergrößern.

Ausgeklinkte oder umgeklappte Bereiche können die Fläche des Wärmeübertragers vergrößern oder Totbereiche im PCM-Material verkleinern. Hierdurch kann die Wärmeübertragung zwischen Kältemittel und Trinkwasser bzw. zwischen Kältemittel und Heizkreismedium weiter verbessert werden.

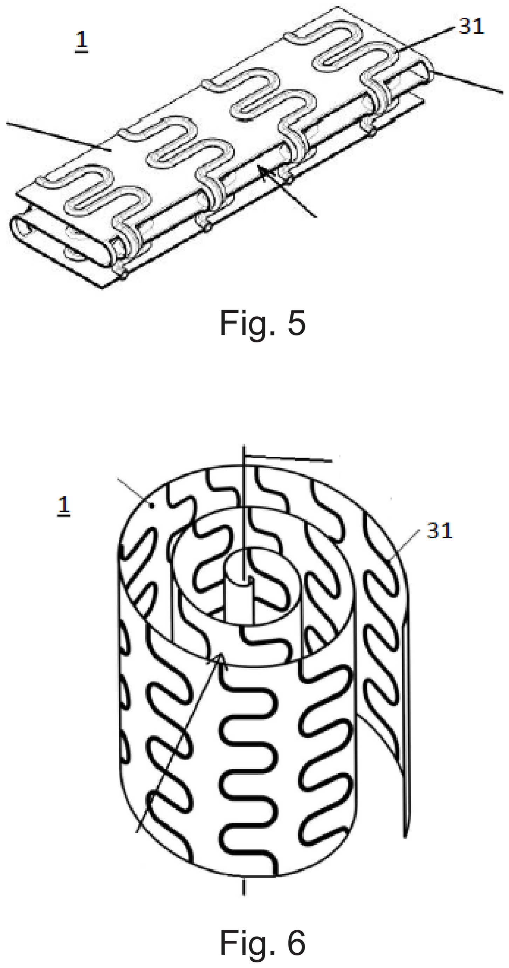

Fig. 5 und 6 illustrieren zwei beispielhafte dreidimensionale Anordnungen eines erfindungsgemäßen Wärmeübertragers 1 in einem erfindungsgemäßen Wärmespeicher 13. In Fig. 5 ist der Wärmeübertrager 1 zu mehreren Lagen gefaltet, die dicht übereinander liegen, wobei ein nicht dargestelltes Wärmespeichermedium dazwischen angeordnet wird. Fig. 6 zeigt eine Ausführung mit einem spiralförmig gewickelten Wärmeübertrager 1.

Die Erfindung schafft somit einen kompakten Wärmespeicher 13 für Trinkwasser und/oder als Heizwasser-Pufferspeicher, insbesondere mit einem Phasenwechselmaterial (PCM) als Wärmespeichermedium. Der Wärmespeicher 13 umfasst Wärmeübertrager 1 für das Primärmedium (Kältemittel der Wärmepumpe 10) und mindestens ein Sekundärmedium (Trinkwasser und/oder Wärmeträgermedium des Heizkreises). Da der Wärmespeicher 13 mit einem Wärmespeichermedium, insbesondere PCM, gefüllt ist, kann er ähnlich wie eine Batterie als Puffer dienen und thermische Energie speichern.

Der erfindungsgemäße Wärmespeicher 13 bietet in vorteilhafter Weise eine sehr große Wärmeübertragungsfläche zwischen dem Wärmespeichermedium und dem Kältemittel bzw. zwischen dem Wärmespeichermedium und den Sekundärmedien. Ferner kann der Wärmeübertrager 1 im Wärmespeicher 13 als Verflüssiger des Wärmepumpenkreislaufes verwendet werden.

In alternativen Ausführungen zur Fig. 5 und Fig. 6 kann der Wärmeübertrager 1 so ausgebildet und geformt sein, dass er gleichzeitig die Funktion zumindest eines Teils eines Speichergehäuses des Wärmespeichers 13 erfüllt. Dies kann insbesondere bei einer sehr flachen und langgezogenen Ausführung des Wärmespeichers 13, z.B. bei engen Platzverhältnissen vorteilhaft sein.

Der Wärmespeicher 13 muss bei Verwendung eines passiven Speichermediums, z.B. PCM, keinen hohen Drücken standhalten. Der Wärmespeicher 13 muss nur dem Eigengewicht bzw. äußeren mechanischen Kräften standhalten. Dadurch können das Gehäuse des Wärmespeichers 13 bzw. der mindestens eine Wärmeübertrager 1 aus einem dünnwandigen metallischen Material ausgeführt sein. Wie oben beschrieben, kann der Wärmeübertrager 1 dabei selbst zumindest als Teil des Gehäuses des Wärmespeichers 13 (ganz oder teilweise) fungieren.

Der erfindungsgemäße Wärmespeicher 13 kann dadurch (drucklos) in beliebiger Form gestaltet werden. Eine eckige, flache, gekrümmte oder sonstige Form ist möglich, so dass die Form je nach Anwendung passend ausgestaltet werden kann.

Der Wärmespeicher 13 kann entweder mit einem oder mehreren Wärmespeichermedien gefüllt sein. Als Wärmespeichermedium kann z.B. Wasser, Salzhydrat, Paraffin oder eine Mischung daraus verwendet werden.

Bei Verwendung unterschiedlicher Wärmespeichermedien, sind diese vorzugsweise beschaffen, dass sie eine unterschiedliche Schmelztemperatur aufweisen. Dabei wird das Material vorzugsweise so gewählt, dass es sich aufgrund unterschiedlicher Dichten trennt und nicht vermischt. Das Material mit der geringeren Schmelztemperatur sollte dabei schwerer sein. Dadurch kann die Effizienz der Wärmepumpe gesteigert werden, da die Temperatur beim Beladen des Speichers zeitweise geringer ist und die Wärmepumpe mit einem höheren COP ("Coefficient of Performance") arbeiten kann.

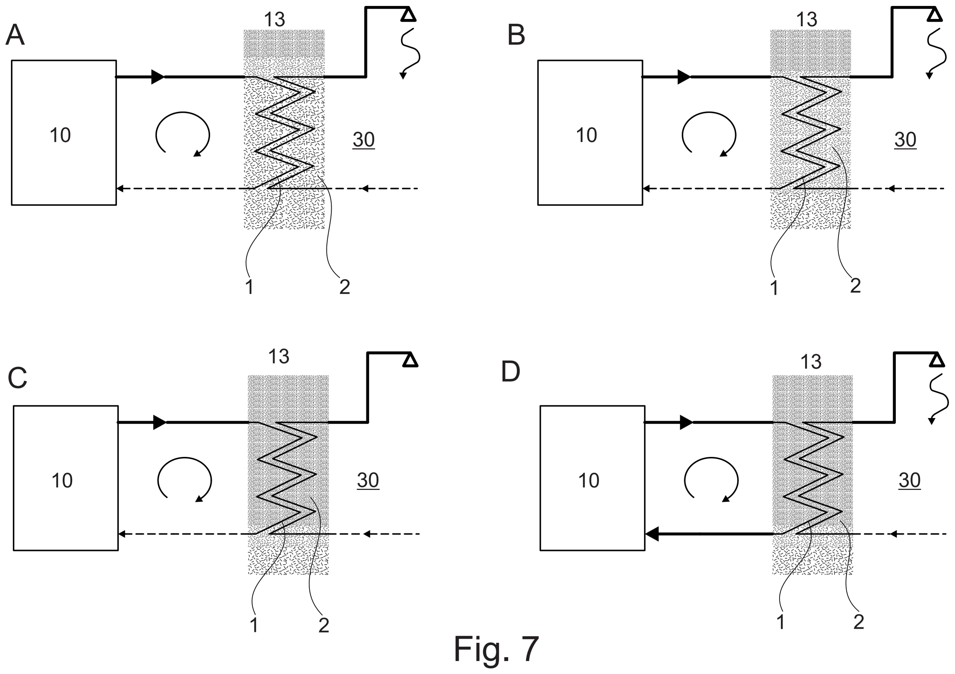

Fig. 7 illustriert verschiedene Betriebszustände einer Wärmepumpe 10 mit angeschlossenem offenen Trinkwasserkreislauf 30 zum Bereitstellen von Warmwasser. Kaltes Trinkwasser wird am erfindungsgemäßen Wärmespeicher 13, der als Verflüssiger betrieben wird, durch das Kältemittel bzw. das Wärmespeichermedium 2 erhitzt.

Fig. 7A zeigt einen sogenannten "Boosterbetrieb", Fig. 7B zeigt einen sogenannten "Kombibetrieb", Fig. 7C zeigt einen Ladebetrieb und Fig. 7D zeigt einen Zapfbetrieb.

Fig. 7A zeigt einen Fall, in dem der Wärmespeicher 13 nahezu leer ist, was bedeutet, dass kaum noch Wärme im Wärmespeichermedium 2 gespeichert ist. Dennoch kann anders als bei einem herkömmlichen Warmwasserspeicher Wärme entnommen werden, da eine direkte Wärmeübertragung von der Wärmequelle (10) auf die Wärmesenke (30) möglich ist. In diesem Boosterbetrieb kann gleichzeitig heißes Trinkwasser aus dem Trinkwasserkreis 30 entnommen werden, während der Wärmespeicher 13 von der Wärmepumpe 10 mit Wärme beladen wird.

Dieser Betriebszustand wird dadurch ermöglicht, dass der Rollbond-Wärmeübertrager 1 einerseits einen Wärmekontakt zwischen Kältemittel und Wärmespeichermedium 2 herstellt und andererseits eine direkte Wärmeübertragung vom Kältemittel auf das Sekundärmedium (hier Trinkwasser) ähnlich wie bei einem Durchlauferhitzer bereitstellt.

Fig. 7B zeigt einen Kombibetrieb, der dem Zustand von Fig. 7A ähnelt, wobei der Wärmespeicher 13 nicht fast leer, sondern teilweise beladen ist. Dieser Betriebsmodus wäre auch bei einem herkömmlichen Warmwasserspeicher möglich. Es wird warmes Wasser gezapft, während die Wärmepumpe 10 den Wärmespeicher 13 mit Wärme belädt.

Fig. 7C zeigt einen Ladebetrieb ähnliche wie Fig. 7A und 7B aber ohne aktive Entnahme von warmen Trinkwasser aus dem Trinkwasserkreis 30. Fig. 7D zeigt einen Zapfbetrieb bei vollständig geladenem Wärmespeicher 13 ohne aktive Beladung des Wärmespeichers 13 mit Wärme. Die in Fig. 7B bis 7D illustrierten Betriebszustände sind im Wesentlichen auch bei herkömmlichen Wärmepumpensystemen mit herkömmlichen Warmwasser- oder Pufferspeichern möglich. Der Boosterbetrieb von Fig. 7A wird durch den erfindungsgemäßen Wärmespeicher 13 mit Rollbond-Wärmeübertrager 1 ermöglicht.

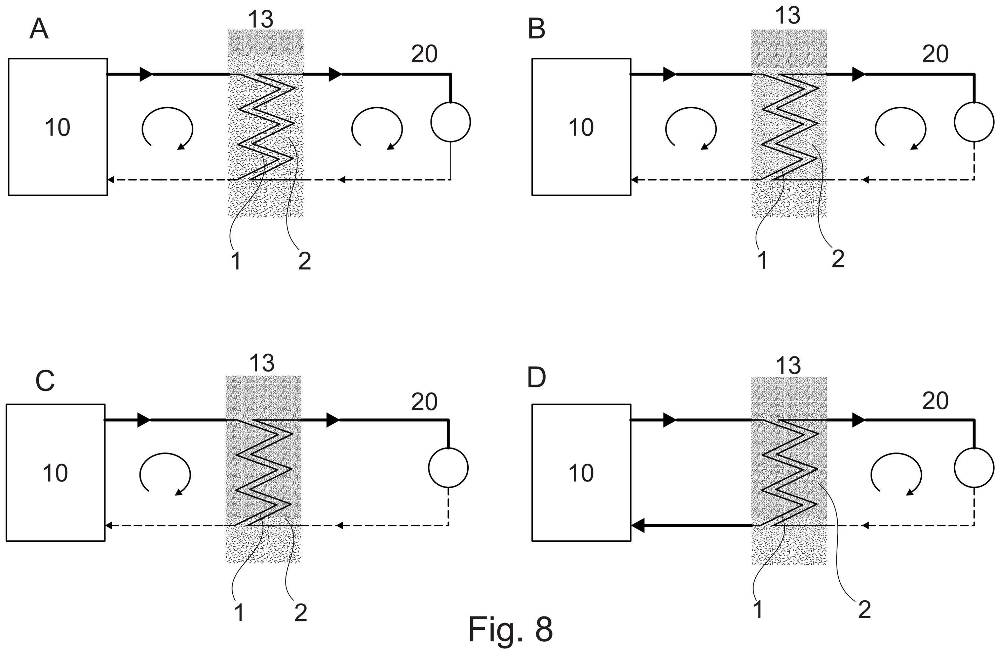

Fig. 8A bis Fig. 8D illustrieren die entsprechenden Betriebszustände für den Heizkreis 20.

Im Boosterbetrieb kann somit Wärme über das mittlere Blech 1c direkt von der ersten Leitung 31 mit dem Kältemittel auf die zweite Leitung 32 bzw. dritte Leitung 33 übertragen werden, so dass ein normales Zapfen von Wärme aus dem Wärmespeicher 13 unterstützt wird, obwohl der Wärmespeicher fast leer ist. Dabei findet vorzugsweise sowohl Konvektion als auch Wärmeleitung statt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### BEZUGSZEICHENLISTE

- 1: Wärmeübertrager
- 1a: erstes Blech
- 1b: zweites Blech
- 1c: drittes Blech / Trennwand
- 2: Wärmespeichermedium

- 10: Wärmepumpenvorrichtung
- 11: Verdichter
- 12: Vierwegeventil
- 13: Wärmespeicher / Verflüssiger
- 14: Expansionsventil
- 15: Verdampfer

- 20: Heizkreis

- 30: Trinkwasserkreis
- 31: erste Leitung
- 32: zweite Leitung
- 33: dritte Leitung

## Patentansprüche

1. Wärmespeicher (13) für eine Wärmepumpe (10), umfassend:
mindestens einen flächigen Wärmeübertrager (1); und
ein Wärmespeichermedium (2), das den mindestens einen Wärmeübertrager (1) zumindest teilweise umgibt, wobei der mindestens eine Wärmeübertrager (1) umfasst:
drei Bleche (1a, 1b, 1c), die durch ein Rollbond-Verfahren zusammengefügt sind;
eine mittels einem ersten Blech (1a) auf einer ersten Hauptseite ausgebildete erste Leitung (31) für ein Kältemittel eines Kältemittelkreislaufs der Wärmepumpe (10);
eine mittels einem zweiten Blech (1b) auf einer der ersten Hauptseite gegenüberliegenden zweiten Hauptseite ausgebildete zweite Leitung (32) für ein Wärmeträgermedium eines Heizkreises (20); und/oder
eine mittels dem zweiten Blech (1b) auf einer der zweiten Hauptseite ausgebildete dritte Leitung (33) für einen Trinkwasserkreis (30);
ein drittes mittleres Blech (1c) als Trennwand zwischen dem ersten Blech (1a) und dem zweiten Blech (1b).

2. Wärmespeicher (13) nach Anspruch 1, wobei
das Wärmespeichermedium (2) ein Phasenwechselmaterial ist.

3. Wärmespeicher (13) nach Anspruch 1 oder 2, wobei
die erste Leitung (31) mäanderförmig ausbildet ist; und/oder
die zweite Leitung (32) mäanderförmig ausbildet ist; und/oder
die dritte Leitung (33) mäanderförmig ausbildet ist.

4. Wärmespeicher (13) nach einem der vorstehenden Ansprüche, wobei:
ein Querschnitt der ersten Leitung (31) die Form eines Kreissegments aufweist; und/oder
ein Querschnitt der zweiten Leitung (32) die Form eines Kreissegments aufweist; und/oder
ein Querschnitt der dritten Leitung (33) die Form eines Kreissegments aufweist.

5. Wärmespeicher (13) nach einem der vorstehenden Ansprüche, wobei:
eine Querschnittsfläche der zweiten Leitung (32) und/oder der dritten Leitung (33) das Doppelte oder mehr der Querschnittsfläche der ersten Leitung (31) beträgt.

6. Wärmespeicher (13) nach einem der vorstehenden Ansprüche, wobei:
der flächige Wärmeübertrager (1) mindestens einen Teil eines Gehäuses des Wärmespeichers bildet, welches das Wärmespeichermedium (2) umgibt.

7. Wärmespeicher (13) nach Anspruch 6, wobei:
die erste Hauptfläche des Wärmeübertragers (1) mit der ersten Leitung (31) an einer Außenseite des Gehäuses angeordnet ist.

8. Wärmespeicher (13) nach einem der vorstehenden Ansprüche, wobei:
der Wärmespeicher (13) zwei oder mehr flächige Wärmeübertrager (1) aufweist; und/oder
der flächige Wärmeübertrager (1) als mehrere Lagen gefaltet angeordnet ist, wobei zwischen den Lagen jeweils das Wärmespeichermedium (2) angeordnet ist; und/oder
wobei der flächige Wärmeübertrager (1) spiralförmig gewickelt angeordnet ist, wobei zwischen den Wicklungen jeweils das Wärmespeichermedium (2) angeordnet ist.

9. Wärmespeicher (13) nach Anspruch 8, wobei:
ein Abstand zwischen den zwei oder mehr flächigen Wärmeübertragern (1) oder zwischen den Lagen oder zwischen den Wicklungen mindestens das Doppelte des Durchmessers der zweiten Leitung (32) und/oder der dritten Leitung (33) beträgt.

10. Wärmespeicher (13) nach einem der vorstehenden Ansprüche, wobei:
die erste Leitung (31) und die zweite Leitung (32) mindestens entlang der Hälfte der Länge der ersten Leitung (31) überlappen; und/oder
die erste Leitung (31) und die dritte Leitung (32) mindestens entlang der Hälfte der Länge der ersten Leitung (31) überlappen.

11. Wärmepumpe (10) zum Heizen oder Kühlen eines Gebäudes, wobei die Wärmepumpe (10) einen Wärmespeicher (13) nach einem der Ansprüche 1 bis 10 aufweist, der in einem Heizbetrieb der Wärmepumpe (10) als Verflüssiger betrieben wird.

12. Verfahren zum Betreiben einer Wärmepumpe (10) nach Anspruch 11, **dadurch gekennzeichnet, dass** die Wärmepumpe einen Betriebszustand aufweist, bei dem der Wärmespeicher (13) über den Wärmeübertrager (1) mit Wärme beladen wird, während der Heizkreis (20) und/oder der Trinkwasserkreis (30) Wärme entnehmen.

13. Verfahren nach Anspruch 12, wobei über das dritte mittlere Blech (1c) eine direkte Wärmeübertragung vom Kältemittel im Kältemittelkreislauf der Wärmepumpe (10) auf den Heizkreis (20) und/oder der Trinkwasserkreis (30) stattfindet.
